# EUROPEAN PATENT SPECIFICATION

(11) **EP 1 236 733 B1**
(45) Date of publication and mention of the grant of the patent: **21.01.2004**
(21) Application number: 02003891.5
(22) Date of filing: 21.02.2002
(51) Int. Cl.: C07F 9/38

(54) **A process for the preparation of disodium pamidronate**
Verfahren zur Herstellung von Dinatrium Pamidronat
Procédé de préparation de pamidronate disodique

(30) Priority: 23.02.2001 IT MI010364
(43) Date of publication of application: 04.09.2002
(73) Proprietor: Bioindustria Laboratorio Italiano Medicinali S.p.a., 15067 Novi Ligure (AL) (IT)
(72) Inventor: Caraccia, Nicola, 15067 Novi Ligure (AL) (IT); Castellari, Franco, 15067 Novi Ligure (AL) (IT); Gatti, Pier Andrea, 15067 Novi Ligure (AL) (IT); Giordani, Cristiana, 15067 Novi Ligure (AL) (IT); Tarditi, Roberto, 15067 Novi Ligure (AL) (IT)
(74) Representative: Minoja, Fabrizio, Dr.

(56) References cited:
- WO-A-00/34293
- WO-A-01/42134

## Description

### SUMMARY OF THE INVENTION

The present invention relates to a process for the synthesis of sodium pamidronate.

### TECHNICAL BACKGROUND

Disodium 3-amino-1-hydroxypropanediphosphonate or disodium pamidronate, having the following formula: 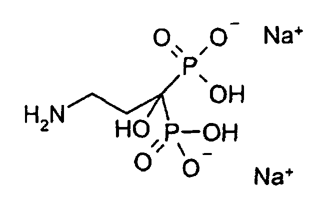 is an agent active on bone reabsorption mechanism in hypercalcemia connected with tumors or carcinomas with or without bone metastasis (US 4,711,880 and US 4,639,338). Sodium pamidronate is at present commercially available in the form of the freeze-dried pentahydrate product under the name Aredia® by Novartis Pharmaceuticals Corp.

Sodium pamidronate is prepared by partially neutralizing a pamidronic acid hot solution with sodium hydroxide to pH 7-7.5, then starting crystallization at a temperature above 50°C. The mixture is then slowly cooled to a temperature ranging from 0 to 5°C and disodium pamidronate pentahydrate is collected by filtration.

This product has excellent crystallinity, is extremely stable under normal ambient conditions and has water content between 24.1 and 25%.

An amorphous form of disodium pamidronate is also known (US 4,639,338), which is reportedly deliquescent in the air and contains 12.9% of water, corresponding to the dihydrate compound, which is also described in the above patent, which converts into the already known pentahydrate form.

A process for preparing amorphous, essentially anhydrous disodium pamidronate is disclosed in WO 00/34293 A. The process comprises the following steps:
- preparing a stirred slurry of pamidronic acid in water;
- adding aqueous solution of sodium hydroxide in an about 2:1 molar ratio of sodium hydroxide to pamidronic acid; to yield a clear solution having a pH of about 6.5;
- filtering said solution; and
- freezing and lyophilizing said filtered solution.

In view of the above cited patents, an easy method has been developed for the preparation of a hydrated form which is stable notwithstanding the different water content.

### DISCLOSURE OF THE INVENTION

The present invention relates to a process for the preparation of a novel, chemically stable form of disodium pamidronate.

The product obtained by the process of the invention has water content ranging from 5 to 11%, is solid, can be stored under normal ambient conditions without undergoing alterations in its structure and water content and therefore may be used in any pharmaceutical preparation for the oral, rectal, transdermal, intranasal or intravenous administrations.

The process described provides a solid product with different physical characteristics.

The process of the invention is simple to carry out, does not suffer from the problems involved in known processes, and requires neither costly apparatuses nor reagents.

The product obtained by the process of the invention has high crystallinity degree: X ray diffractograms from powders show a different sequence of diffraction peaks, indicating a crystalline phase different from that of the product with 25% water.

The infrared spectroscopical analysis of the product in the solid state in potassium bromide (KBr) shows substantial differences.

Elemental analysis, hydrogen and phosphorous nuclear magnetic resonances, and mass spectrometry confirm the chemical structure of the compound of the invention.

A further advantage of the process of the invention is that it allows the preparation of rather high amounts by using simple apparatuses.

More particularly, the process of the invention comprises the following steps:
a) treatment of a pamidronic acid aqueous suspension with a suitable amount of an aqueous solution with variable concentration of sodium hydroxide (stoichiometric amount, corresponding to the disodium salt) until obtaining a clear solution;
b) filtration of the resulting solution, addition of a suitable solvent and subsequent azeotropical distillation of water;
c) cooling of the resulting solution and precipitation of the product in the desired form.

The azeotropical distillation is carried out with solvents that can be protic or aprotic, water-miscible or not, halogenated or not, aromatic or aliphatic cyclic straight or branched with 2 to 8 carbon atoms.

Preferred solvents are: 1-octanol, cyclohexanone, isopropanol, ethyl acetate, butyl acetate, 2-methoxyethanol, 2-ethoxyethanol, ethanol, 1-butanol, 1-propanol, cyclohexanol, cyclohexane, 1-pentanol, chloroform, heptane, hexane, isoamyl alcohol, isobutyl alcohol, toluene and benzyl alcohol.

The concentration of pamidronic acid in the aqueous suspension ranges from 0.1 M to 0.5 M, and is preferably 0.12 M.

The concentration of the sodium hydroxide solution ranges from 0.1 M to 2 M, and preferably is I M.

The clear solution from step a) is filtered.

The solvent is added in a single portion, in a suitable amount.

Distillation can be carried out under a variable pressure, depending on the solvent used.

The present invention is illustrated in greater detail in the following examples.

### EXAMPLE 1

### Preparation of sodium pamidronate.

250 g of pamidronic acid are suspended in 8.9 liters of water.

The stirred suspension is slowly added with 2.12 liters of a 1M sodium hydroxide solution in water, keeping the temperature at 20 to 25°C, to obtain a clear solution which is stirred for an hour then filtered to remove any suspended particles.

The resulting solution is added with 13 liters of 2-methoxyethanol and the mixture is heated to the distillation temperature, thereby distilling off 21 liters of water / solvent mixture.

The remaining mixture is slowly cooled to 10°C and stirred for three hours at this temperature.

The resulting solid is collected by filtration, suspended in acetone and stirred for an hour at temperature ranging from 10 to 25°C, then filtered again and dried at 65°C until constant weight.
Elemental analysis:
Found C% 12.25; H% 4.14; N% 4.73; P% 21.59; Na% 11.73.
Purity (HPLC): 100.87
I.R. (KBr): cm⁻¹: 3184 b, 2771 s, 1618 s, 1525 s, 1155 s, 916s.

N.M.R.: the samples were dissolved in deuterated water and the phosphorous and proton N.M.R. spectra were recorded at a temperature of 305K with a Bruker Avance 500 apparatus. The proton chemical shift (ppm) is in relation to sodium 2,2-dimethyl-2-silapentane-5-sulfonate, whereas the phosphorous chemical shift (ppm) is in relation to 85% phosphoric acid. Coupling constants are expressed in Hz.
^{H}N.M.R. 500MHz (D₂O): δ 2.22 (tt, J=12.2 and 6.6, 2H); δ 3.27 (t, J=6.6, 2H) ^{P}N.M.R. 500MHz (D₂O): δ 18.03 (t, J=12.2).
- D.S.C.: 1^{st} endothermic from 25 to 170°C weight loss 6.6%
2^{nd} endothermic from 190 to 240°C melting and simultaneous decomposition
H₂O% (K.F.): 6.65%
X ray diffraction from powders (Ital-structure θ/θ automatic difractometer).

| Relative intensity | D(Å) | 2θ |
|---|---|---|
| 19 | 9.893 | 8.92 |
| 50 | 9.040 | 9.76 |
| 100 | 8.718 | 10.12 |
| 12 | 6.597 | 13.36 |
| 10 | 5.631 | 15.64 |
| 20 | 5.517 | 15.96 |
| 18 | 5.448 | 16.16 |
| 18 | 5.190 | 16.96 |
| 27 | 4.920 | 17.88 |
| 20 | 4.513 | 18.24 |
| 16 | 4.513 | 19.00 |
| 18 | 4.513 | 19.48 |
| 12 | 4.143 | 21.20 |
| 28 | 3.925 | 22.36 |
| 27 | 3.060 | 28.56 |
| 36 | 2.902 | 30.08 |
| 28 | 2.848 | 30.64 |
| 26 | 2.829 | 30.84 |
| 11 | 2.774 | 31.44 |
| 11 | 2.662 | 32.72 |
| 13 | 2.636 | 33.04 |
| 10 | 2.303 | 37.64 |
| 11 | 2.077 | 41.56 |
| 13 | 2.048 | 42.12 |

### EXAMPLE 2

### Preparation of sodium pamidronate

250 g of pamidronic acid are suspended in 8.9 liters of water.

The stirred suspension is slowly added with 2.12 liters of a 1M sodium hydroxide solution in water, keeping the temperature at 20 to 25°C, to obtain a clear solution which is stirred for an hour then filtered to remove any suspended particles.

The resulting solution is added with 11.5 liters of n-octanol and the mixture is heated to the distillation temperature, thereby distilling off 19 liters of water / solvent mixture.

The remaining mixture is slowly cooled to 10°C and stirred for three hours at this temperature.

The resulting solid is collected by filtration, suspended in acetone and stirred for an hour at temperature ranging from 10 to 25°C, then filtered again and dried at 65°C until constant weight.

### EXAMPLE 3

### Preparation of sodium pamidronate

250 g of pamidronic acid are suspended in 8.9 liters of water.

The stirred suspension is slowly added with 2.12 liters of a 1M sodium hydroxide solution in water, keeping the temperature at 20 to 25°C, to obtain a clear solution which is stirred for an hour then filtered to remove any suspended particles.

The resulting solution is added with 15 liters of cyclohexanol and the mixture is heated to the distillation temperature, thereby distilling off 23 liters of water / solvent mixture.

The remaining mixture is slowly cooled to 10°C and stirred for three hours at this temperature.

The resulting solid is collected by filtration, suspended in acetone and stirred for an hour at temperature ranging from 10 to 25°C, then filtered again and dried at 65°C until constant weight.

### EXAMPLE 4

### Preparation of sodium pamidronate

250 g of pamidronic acid are suspended in 8.9 liters of water.

The stirred suspension is slowly added with 2.12 liters of a 1M sodium hydroxide solution in water, keeping the temperature at 20 to 25°C, to obtain a clear solution which is stirred for an hour then filtered to remove any suspended particles.

The resulting solution is added with 20 liters of cyclohexanone and the mixture is heated to the distillation temperature, thereby distilling off 29 liters of water / solvent mixture.

The remaining mixture is slowly cooled to 10°C and stirred for three hours at this temperature.

The resulting solid is collected by filtration, suspended in acetone and stirred for an hour at temperature ranging from 10 to 25°C, then filtered again and dried at 65°C until constant weight.

## Claims

1. A process for the preparation of crystalline disodium pamidronate, which process comprises the following steps:
a) treatment of an aqueous suspension of pamidronic acid with a sodium hydroxide aqueous solution until obtaining a clear solution;
b) filtration of the resulting solution, addition of a solvent and subsequent azeotropical distillation of water;
c) cooling of the resulting solution and precipitation of the product.

2. A process as claimed in claim 1, wherein the concentration of pamidronic acid in step a) ranges from 0.1 M to 0.5 M.

3. A process as claimed in claim 1, wherein the concentration of the aqueous sodium hydroxide solution in step a) ranges from 0.1 M to 2 M.

4. A process as claimed in claim 1, wherein the molar ratio of pamidronic acid to sodium hydroxide is 1:2.

5. A process as claimed in claim 1, wherein the azeotropical distillation of step b) is carried out with solvents that can be protic or aprotic solvents, water-miscible or not, halogenated or not, aromatic or aliphatic cyclic straight or branched with a 2 to 8 carbon atoms.

6. A process as claimed in claim 5, wherein solvents are selected from 1-octanol, cyclohexanone, isopropanol, ethyl acetate, butyl acetate, 2-methoxyethanol, 2-ethoxyethanol, ethanol, 1-butanol, 1-propanol, cyclohexanol, cyclohexane, 1-pentanol, chloroform, heptane, hexane, isoamyl alcohol, isobutyl alcohol, toluene and benzyl alcohol.

7. Crystalline disodium pamidronate containing water in percentage ranging from 5 to 11 %.

## Patentansprüche

1. Verfahren zur Herstellung von kristallinem Dinatriumpamidronat, umfassend die folgenden Stufen:
a) Behandlung einer wässrigen Suspension von Pamidronsäure mit einer wässrigen Natriumhydroxidlösung bis eine klare Lösung erhalten wird;
b) Filtration der resultierenden Lösung, Zugabe eines Lösungsmittels und anschließende azeotrope Destillation von Wasser;
c) Abkühlen der resultierenden Lösung und Ausfällen des Produkts.

2. Verfahren nach Anspruch 1, worin die Konzentration an Pamidronsäure in Stufe a) von 0,1 M bis 0,5 M reicht.

3. Verfahren nach Anspruch 1, worin die Konzentration der wässrigen Natriumhydroxidlösung in Stufe a) von 0,1 M bis 2 M reicht.

4. Verfahren nach Anspruch 1, worin das Molverhältnis von Pamidronsäure zu Natriumhydroxid 1:2 beträgt.

5. Verfahren nach Anspruch 1, worin die azeotrope Destillation von Stufe b) mit Lösungsmitteln durchgeführt wird, die protische oder aprotische Lösungsmittel, wassermischbar oder nicht, halogeniert oder nicht, aromatisch oder aliphatisch, cyclisch, geradkettig oder verzweigtkettig mit 2 bis 8 Kohlenstoffatomen sein können.

6. Verfahren nach Anspruch 5, worin die Lösungsmittel ausgewählt sind aus 1-Octanol, Cyclohexanon, Isopropanol, Ethylacetat, Butylacetat, 2-Methoxyethanol, 2-Ethoxyethanol, Ethanol, 1-Butanol, 1-Propanol, Cyclohexanol, Cyclohexan, 1-Pentanol, Chloroform, Heptan, Hexan, Isoamylalkohol, Isobutylalkohol, Toluol und Benzylalkohol.

7. Kristallines Dinatriumpamidronat enthaltend Wasser mit einem Prozentsatz im Bereich von 5 bis 11%.

## Revendications

1. Procédé pour la préparation de pamidronate disodique cristallin, ce procédé comprenant les étapes suivantes :
a) traitement d'une suspension aqueuse d'acide pamidronique avec une solution aqueuse d'hydroxyde de sodium jusqu'à obtention d'une solution transparente ;
b) filtration de la solution obtenue, addition d'un solvant et distillation azéotropique subséquente de l'eau ;
c) refroidissement de la solution obtenue et précipitation du produit.

2. Procédé selon la revendication 1, dans lequel la concentration d'acide pamidronique dans l'étape a) va de 0,1 M à 0,5 M.

3. Procédé selon la revendication 1, dans lequel la concentration de la solution aqueuse d'hydroxyde de sodium dans l'étape a) va de 0,1 M à 2 M.

4. Procédé selon la revendication 1, dans lequel le rapport molaire de l'acide pamidronique à l'hydroxyde de sodium est de 1:2.

5. Procédé selon la revendication 1, dans lequel la distillation azéotrope de l'étape b) est effectuée avec des solvants qui peuvent être des solvants protiques ou aprotiques, miscibles à l'eau ou non, halogénés ou non, aromatiques ou aliphatiques, cycliques, linéaires ou ramifiés avec 2 à 8 atomes de carbone.

6. Procédé selon la revendication 5, dans lequel les solvants sont choisis parmi le 1-octanol, la cyclohexanone, l'isopropanol, l'acétate d'éthyle, l'acétate de butyle, le 2-méthoxyéthanol, le 2-éthoxyéthanol, l'éthanol, le 1-butanol, le 1-propanol, le cyclohexanol, le cyclohexane, le 1-pentanol, le chloroforme, l'heptane, l'hexane, l'alcool isoamylique, l'alcool isobutylique, le toluène et l'alcool benzylique.

7. Pamidronate disodique cristallin contenant de l'eau en un pourcentage allant de 5 à 11 %.
